# EUROPÄISCHE PATENTSCHRIFT

(11) **EP 2 531 642 B1**
(45) Veröffentlichungstag und Bekanntmachung des Hinweises auf die Patenterteilung: **23.04.2014**
(21) Anmeldenummer: 11704028.7
(22) Anmeldetag: 17.01.2011
(51) Int. Cl.: D06H 1/04, B32B 7/04, B32B 27/12, B44C 1/00, D06Q 1/00

(54) **VERFAHREN ZUM HERSTELLEN EINES TEXTILPRODUKTS**
METHOD FOR PRODUCING A TEXTILE PRODUCT
PROCÉDÉ DE FABRICATION D'UN PRODUIT TEXTILE

(30) Priorität: 02.02.2010 US 300494 P; 02.02.2010 DE 102010001511
(43) Veröffentlichungstag der Anmeldung: 12.12.2012
(73) Patentinhaber: Kaufmann, Harald, 45525 Hattingen (DE)
(72) Erfinder: Kaufmann, Harald, 45525 Hattingen (DE)
(74) Vertreter: Frank, Hartmut
(86) Internationale Anmeldenummer: PCT/EP2011/050539
(87) Internationale Veröffentlichungsnummer: WO 2011/095385

(56) Entgegenhaltungen:
- WO-A1-2009/090765
- US-A- 4 427 472
- US-A- 5 306 374
- US-A- 5 945 201
- US-A- 6 155 189
- US-B1- 6 194 044

## Beschreibung

### HINTERGRUND DER ERFINDUNG

### Gebiet der Erfindung

Die Erfindung betrifft ein Verfahren zum Herstellen eines Textilprodukts, insbesondere eines Textilprodukts, welches mit einem Motiv mit reflektierenden Eigenschaften versehen ist.

### Stand der Technik

Aus DE 1 446 828 A1 sind eine reflektierende Übertragungsfolie sowie ein Verfahren zur Herstellung reflexreflektierender Gegenstände z.B. zur Markierung von Kleidungsstücken bekannt. Die Übertragungsfolie weist eine Übertragungsschicht, die aus einer Klebstoffschicht und einer auf dieser befindlichen kautschukartigen Bindemittelschicht mit eingelagerten, teilweise herausragenden Mikrokügelchen besteht, und eine auf der Klebstoffseite der Übertragungsschicht befindliche abziehbare Schutzschicht auf. Die Übertragungsschicht weist auf ihrer Vorderseite eine nach dem Aufkleben trocken abziehbare, abmessungsbeständige Trägerunterlage auf. Zur Übertragung auf ein Kleidungsstück wird ein heißes Bügeleisen fest auf die Trägerunterlage des Gebildes gepresst und anschließend die Trägerunterlage von dem reflexreflektierenden Übertragungsfilm abgezogen. Zur Auftragung verschiedenartig geformter Markierungen müssen die betreffenden Motive zunächst ausgeschnitten und sodann auf das darunterliegende Kleidungsstück bzw. Gewebe aufgetragen werden.

Es ist ferner im Stand bekannt, auf ein Textilprodukt wie z.B. ein Kleidungsstück übertragene, reflektierende Motive, insbesondere einzelne bzw. freistehende Buchstaben, nach der Übertragung mit einer umlaufenden Naht zu versehen, was zwar im Hinblick auf die im Ergebnis erzielte Kombination aus reflektierender und nicht-reflektierender Wiedergabe des Motivs zu attraktiven Effekten führt, jedoch das Verfahren insgesamt im Hinblick auf die Vielzahl von erforderlichen Verfahrensschritten sowie insbesondere die je nach Motiv komplexe Schneidarbeit aufwändig und (infolge der für die Schneidarbeit i.d.R. eingesetzten, teueren Laservorrichtungen) auch kostspielig macht.

Aus US 4,427,472 ist u.a. ein Verfahren zur Aufbringung von einer Mehrzahl von Gewebe bzw. Stoffstücken gemäß einem Design oder Motiv auf einen Stoff- bzw. Gewebehintergrund bekannt. Bei diesem Verfahren werden zunächst grob ausgeschnittene Stoffsegmente auf dem Gewebehintergrund platziert und mittels eines Fadens mit einer kontrastierenden Farbe aufgenäht. Dieser kontrastierende Faden dient als Präzisionsführung für ein anschließendes Zurechtschneiden entsprechend dem gewünschten Design bzw. Motiv. Ferner wird der kontrastierende Faden auch als Präzisionsführung für einen weiteren Faden verwendet, um das Design bzw. Motiv endgültig festzulegen, wobei die zunächst mit dem kontrastierenden Faden erzeugten Stiche verdeckt werden.

### ZUSAMMENFASSUNG DER ERFINDUNG

Aufgabe der vorliegenden Erfindung ist es, ein Verfahren zum Herstellen eines Textilprodukts bereitzustellen, welches in besonders verfahrensökonomischer Weise die Herstellung eines attraktiven Textilprodukts mit vergleichsweise geringem Aufwand ermöglicht.

Ein erfindungsgemäßes Verfahren zum Herstellen eines Textilprodukts weist folgende Schritte auf:
- Platzieren einer flächigen Motivvorlage auf einem Textilsubstrat;
- Aufnähen der Motivvorlage auf das Textilsubstrat;
- Entfernen des außerhalb eines durch die Perforation begrenzten Motivs befindlichen Teils der Motivvorlage; und
- dauerhaftes Fixieren des verbliebenen, das Motiv aufweisenden Teils der Motivvorlage an dem Textilsubstrat;
wobei beim Aufnähen der Motivvorlage eine das gewünschte Motiv in der Motivvorlage begrenzende Perforation erzeugt wird, wobei die Motivvorlage bereits ausreichend perforiert wird, dass ein manuelles Abreißen des nicht zu dem gewünschten Motiv gehörenden Teils der Motivvorlage ermöglicht wird.

Dabei wird hier und im Folgenden unter "Aufnähen" im Einklang mit der üblichen Terminologie jeglicher Vorgang verstanden, bei dem ein oder mehrere Nähfäden durch ein Nähgut geführt werden, wobei die Fäden miteinander oder mit dem Nähgut verschlungen werden. Da durch das erfindungsgemäße Aufnähen der Motivvorlage auf das Textilsubstrat vornehmlich eine Perforation der Motivvorlage erzeugt wird und die hierbei erzeugte Verbindung zwischen Motivvorlage und Textilsubstrat erst beim (in der Reihenfolge der obigen Verfahrensschritte abschließenden) Schritt zu einer dauerhaften (z.B. vorzugsweise waschbeständigen) Fixierung wird, kann die entsprechende Naht auch mit einer Stickmaschine erzeugt werden. Insofern, und weil nach dem Abreißen des außerhalb des durch die Perforation begrenzten Motivs befindlichen Teils der Motivvorlage im Wesentlichen die das gewünschte Motiv umgebende Naht verbleibt und erst dann eine anschließende dauerhafte Fixierung (z.B. mittels Wärme oder Druck) erfolgt, kann gewissermaßen das Aufnähen bzw. Aufbringen der Motivvorlage auf das Textilsubstrat auch als "Aufsticken" bezeichnet werden.

Der Erfindung liegt das Konzept zugrunde, beim Aufnähen einer Motivvorlage, bei der es sich insbesondere wie im Weiteren erläutert um einen in geeigneter Weise ausgestalteten Reflexionstransfer handeln kann, zugleich (also gewissermaßen in ein- und demselben Arbeitsschritt) eine Perforation zu erzeugen, die ein anschließendes Entfernen des jenseits der Perforation bzw. außerhalb eines gewünschten Motivs befindlichen Teils ermöglicht.

Dabei kann das Motiv entweder von vorneherein in der Motivvorlage bereits vorhanden sein oder auch durch die Perforation bzw. die die Perforation erzeugende Naht erst definiert werden. Bei dem Motiv kann es sich z.B. um ein beliebiges (auch mehrteiliges) Bildmotiv, um alphanumerische Zeichen (also z.B. auch eine Buchstaben- oder Zahlenfolge) oder auch einfach um eine (in einer oder mehreren Farben, einschließlich weiß oder schwarz sowie durchscheinend) gehaltene Fläche handeln, die ein Teil der Motivvorlage darstellen kann.

Erfindungsgemäß kann somit mit nur wenigen Verfahrensschritten ein attraktives Textilprodukt hergestellt werden, welches beispielsweise einen beliebigen Schriftzug zum einen mit einer eine äußere Umrandungslinie bildenden Naht und zum anderen im Bereich innerhalb dieser Umrandungslinie mit speziellen (also z. B. reflektierenden) Eigenschaften entsprechend der verwendeten Motivvorlage zeigt.

Mittels des erfindungsgemäßen Verfahrens wird insbesondere die herkömmlicherweise übliche Verarbeitung eines Reflexionstransfers, bei der ein Reflexionstransfer zunächst aufwendig (in der Regel manuell oder unter Verwendung einer Laservorrichtung) im Außenbereich geschnitten wird, erheblich vereinfacht. Mit dem Verfahren können insbesondere Kleinserien sehr preiswert hergestellt werden, beispielsweise für Fanclubs fälschungssichere und hochwertige Einzelanfertigungen, indem etwa für einen Sportverein eine bereits mit reflektierenden Logos versehene Folie erstellt wird, auf die dann einzelne Fanclubnamen erfindungsgemäß aufgenäht werden können. Hieraus ergibt sich eine erhebliche Zeit- sowie Kostenersparnis, da etwa das Einsticken oder Aufnähen des Logos entbehrlich ist. Legt man eine typische Stichzahl von z.B. 20.000 bis 30.000 Stichen pro Motiv zugrunde, so kann sich der ersparte Zeitaufwand größenordnungsmäßig beispielsweise auf ca. 20 Minuten belaufen.

Gemäß einer Ausführungsform ist die Motivvorlage mit reflektierenden Eigenschaften versehen. Hierzu wird vorzugsweise als Motivvorlage ein Reflexionstransfer mit folgendem Schichtaufbau verwendet: Basismedium, Transferklebemittel, optionale Zwischenfarbschicht, Reflexionsfarbe, wobei die Reflexionsfarbe eine Vielzahl von Reflexionsteilchen enthält, und wobei die Reflexionsteilchen über die Oberfläche der ausgehärteten Reflexionsfarbe erhaben sind. Das Basismedium (z.B. ein klebemittelabweisendes Schutzpapier auf Silikonbasis) wird vor dem Platzieren auf dem Textilsubstrat entfernt.

Hierbei geht die Erfindung von der Erkenntnis aus, dass ein Reflexionstransfer geeigneten Aufbaus, nämlich gebildet aus einer Transferkleberschicht und einer Farbschicht aus einer Reflexionsfarbe mit einer Vielzahl von Reflexionsteilchen, eine solche Begrenzung der Gesamtdicke des Reflexionstransfers bei zugleich guten Reflexionseigenschaften ermöglicht, dass das erfindungsgemäße Aufnähen auf ein Textilsubstrat unter gleichzeitiger Erzeugung einer hinreichen sauberen Perforation des Reflexionstransfers realisierbar ist.

Dabei ist zu beachten, dass im Stand der Technik gebräuchliche Reflexionstransfers eine vergleichsweise "geschlossene" bzw. versiegelte Schicht aufweisen, die ein Hindurch-Nähen bzw. ein hiermit einhergehendes, sauberes Perforieren gar nicht ermöglicht. Insbesondere erfordern derartige Reflexionstransfers in der Regel, wie schon eingangs erläutert, eine Art "Übertragungstape", welches während des Herstellungsprozesses als Basisschicht für die -seitenverkehrt erfolgende-Aufbringung von Reflexionsteilchen benötigt wird und nach Übertragung auf das Textilsubstrat den Schichtaufbau nach oben hin abschließt, und sind folglich nicht zur Oberseite hin (unter Ermöglichung eines Hindurchnähens durch den gesamten Reflexionstransfer) frei.

Gemäß einer Ausführungsform weist die Motivvorlage auf der dem Textilsubstrat zugewandten Seite eine Fixierungsschicht auf. Bei dieser Fixierungsschicht kann es sich sowohl um eine Fixierungsschicht zur vorläufigen bzw. temporären Fixierung auf dem Textilsubstrat (vor dem anschließenden Aufnähen) als auch um eine das abschließende dauerhafte Fixieren z.B. unter Wärme und/oder Druck ermöglichende Fixierungsschicht.

Gemäß einer Ausführungsform umfasst der Schritt des Platzierens der Motivvorlage auf dem Textilsubstrat ein zumindest vorläufiges Fixieren der Motivvorlage auf dem Textilsubstrat, vorzugsweise unter Verwendung eines Sprühklebers.

Gemäß einer Ausführungsform weist die Motivvorlage eine aus einem thermoplastischen Kunststoff (beispielsweise Polyurethan oder Polyamid) hergestellte Folie auf. Die Motivvorlage kann ferner einen geeigneten Siebdruckkleber (z.B. wie in EP 1 137 546 B1 beschrieben) aufweisen.

Gemäß einer Ausführungsform wird eine Motivvorlage mit einer Gesamtdicke im Bereich von 15 µm bis 100 µm, insbesondere im Bereich von 25 µm bis 85 µm, verwendet.

Gemäß einer Ausführungsform ist in dem Reflexionstransfer das gewünschte Motiv durch die Reflexionsfarbe in der Aufsicht seitenrichtig dargestellt. Eine derartige seitenrichtige Darstellung wird gerade durch den vorstehend beschriebenen Reflexionstransfer geeigneten Aufbaus verwirklicht, vermeidet die im Stand der Technik übliche Verwendung eines "Übertragungstapes", wie es während des Herstellungsprozesses als Basisschicht für eine seitenverkehrt erfolgende Aufbringung von Reflexionsteilchen benötigt wird und ermöglicht somit das erfindungsgemäße Hindurchnähen durch den gesamten Reflexionstransfer.

Die Erfindung betrifft ferner ein Textilprodukt, welches nach einem erfindungsgemäßen Verfahren hergestellt ist.

Weitere Ausgestaltungen der Erfindung sind der Beschreibung sowie den Unteransprüchen zu entnehmen.

Die Erfindung wird nachstehend anhand von in den beigefügten Abbildungen dargestellten Ausführungsbeispielen näher erläutert.

### KURZE BESCHREIBUNG DER ZEICHNUNGEN

Es zeigen:
- Figur 1: ein Flussdiagramm zur Erläuterung eines erfindungsgemäßen Verfahrens in einer bevorzugten Ausführungsform;
- Figur 2a-f: schematische Darstellungen zur Veranschaulichung des erfindungsgemäßen Verfahrens; und
- Figur 3: eine schematische Darstellung eines in dem Verfahren von Figur 1 und 2 verwendeten Reflexionstransfers.

### DETAILLIERTE BESCHREIBUNG BEVORZUGTER AUSFÜHRUNGSFORMEN

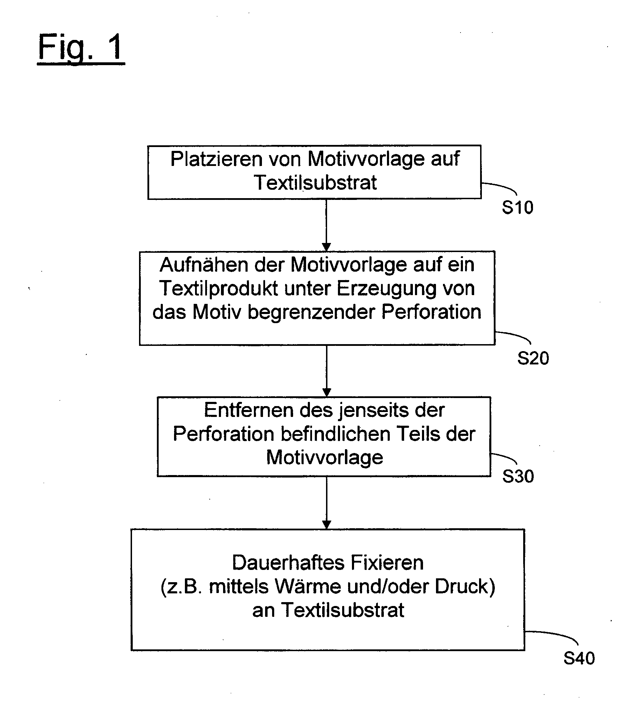

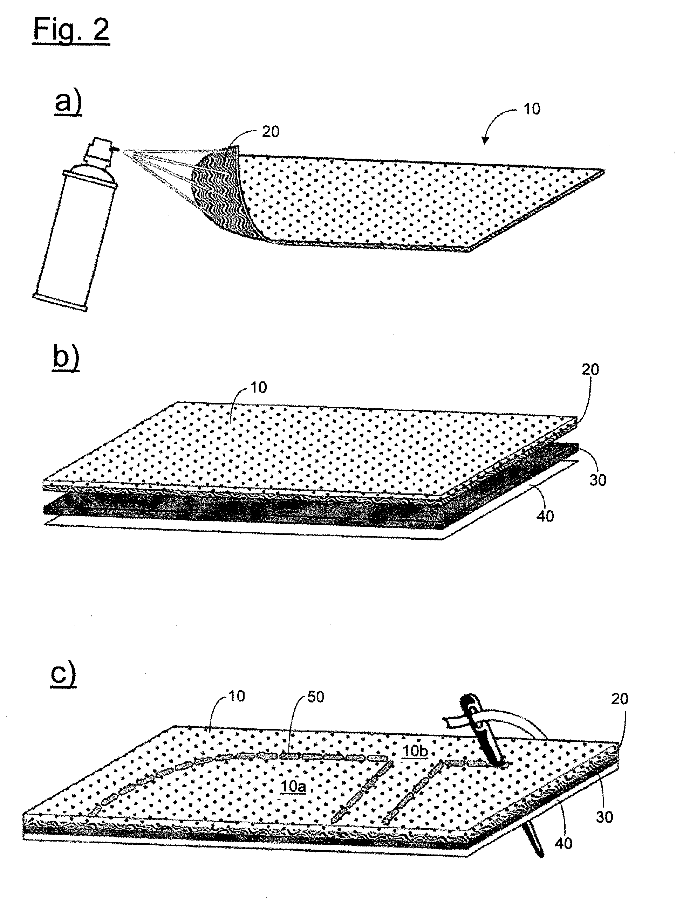

Im Weiteren wird eine bevorzugte Ausführungsform des erfindungsgemäßen Verfahrens unter Bezugnahme auf das in Fig. 1 dargestellte Flussdiagramm sowie die zur Veranschaulichung dienenden schematischen Darstellungen von Fig. 2a bis 2f erläutert.

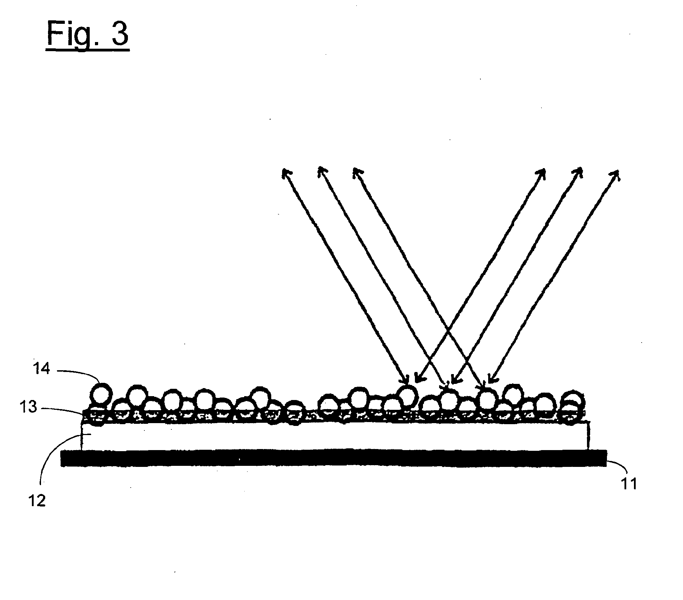

Gemäß Fig. 2a wird zunächst eine Motivvorlage 10 in Form eines Reflexionstransfers, dessen Aufbau unter Bezugnahme auf Fig. 3 noch näher erläutert wird, zur vorläufigen Fixierung mit einer Klebeschicht 20 in Form eines Sprühklebers versehen und sodann auf einem Textilsubstrat 30 (z.B. einem T-Shirt), platziert (Schritt S10), wobei außerdem ein Stickvlies 40 unter das Textilsubstrat 30 gelegt wird.

Die Motivvorlage 10 bzw. der Reflexionstransfer weist ein Motiv auf (wobei dieses Motiv von vorneherein in der Motivvorlage bereits vorhanden sein oder auch durch die im weiteren beschriebene Perforation bzw. die die Perforation erzeugende Naht erst definiert werden kann). Bei diesem Motiv kann es sich z.B. um ein beliebiges Bildmotiv, alphanumerische Zeichen (also z.B. auch eine Buchstaben- oder Zahlenfolge) oder auch einfach um eine (in einer oder mehreren Farben, einschließlich weiß oder schwarz sowie durchscheinend) gehaltene Fläche handeln. Im Falle einer Buchstaben- oder Zahlenfolge kann die Naht auch um jedes einzelne der Zeichen (also z.B. jeden einzelnen, freistehenden Buchstaben) verlaufen. Hierdurch kann bei dem fertiggestellten Textilprodukt auch ein verbessertes Stoffempfinden im Vergleich zu einem vollflächigen Aufnähen eines größeren Motivs erzielt werden.

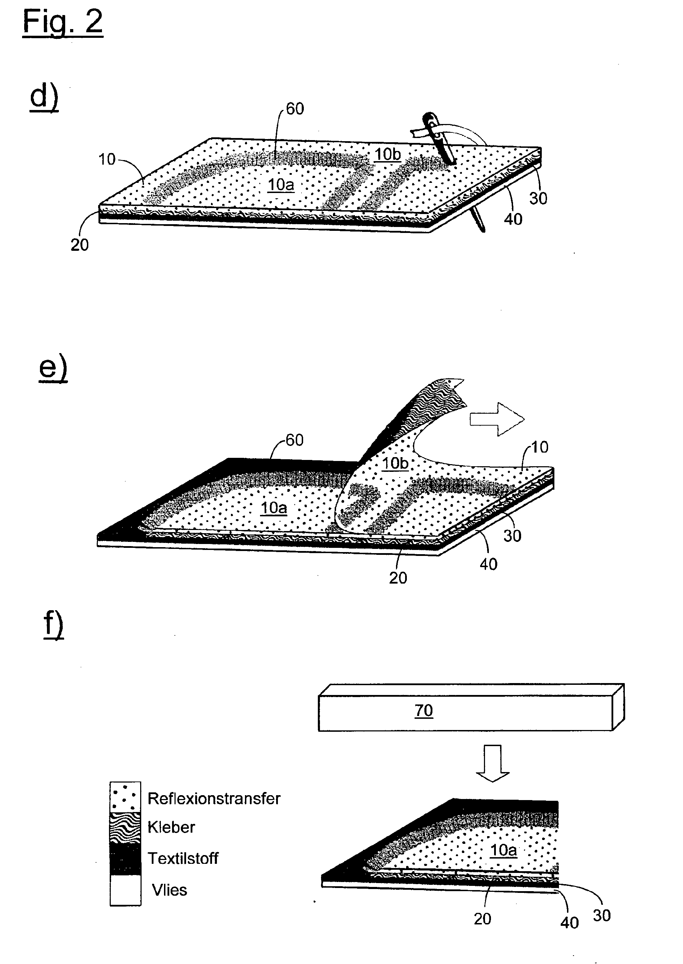

Im Schritt S20 wird die Motivvorlage 10 bzw. der Reflexionstransfer 10 (nach Abziehen des Basismediums von dem in Fig. 3 dargestellten Schichtaufbau) auf das Gebilde aus Textilsubstrat 30, Klebeschicht 20 und Stickvlies 40 derart aufgenäht, dass wenigstens eine das auf dem zu erzeugenden Textilprodukt gewünschte Motiv begrenzende Perforation in der Motivvorlage 10 erzeugt wird. Dieses Aufnähen der Motivvorlage 10 umfasst zunächst die Erzeugung einer als Heftstich ausgeführten ersten Naht 50 gemäß Fig. 2c, vorzugsweise mit einer Stichlänge im Bereich von 2 mm bis 2.5 mm Länge, gefolgt von der Erzeugung einer als Plattstich ausgeführten zweiten Naht 60, vorzugsweise mit einer Stichlänge im Bereich von 2 mm bis 3 mm Länge, gemäß Fig. 2d. Die Erfindung ist jedoch selbstverständlich nicht auf diese lediglich exemplarisch genannten Stick- oder Nähstiche beschränkt, sondern kann auch mit beliebigen anderen Sticharten realisiert werden, bei der die Motivvorlage 10 bzw. Folie perforiert wird.

Anschließend wird gemäß Fig. 2e im Schritt S30 derjenige Abschnitt 10b der Motivvorlage 10, der nicht zu dem auf dem zu erzeugenden Textilprodukt gewünschten Motiv gehört bzw. sich jenseits der Perforation befindet, z.B. manuell entfernt, wobei ausgenutzt wird, dass die Motivvorlage 10 durch die zuvor im Schritt S20 erzeugten Nähte 50, 60 gut perforiert ist.

Daraufhin wird in einem Schritt S40 gemäß Fig. 2f das Textilprodukt mitsamt dem verbliebenen Teil der Motivvorlage 10 bzw. des Reflexionstransfers zur dauerhaften Fixierung unter eine Transferpresse 70 gelegt und mittels Wärme und/oder Druck dauerhaft fixiert, z.B. für eine Zeitdauer von 5 bis 20 Sekunden bei einer Temperatur von 120° bis 180°C gepresst.

Der als Motivvorlage 10 verwendete Reflexionstransfer weist vorzugsweise den in Fig. 3 schematisch dargestellten Aufbau auf, d.h. er umfasst in dieser Reihenfolge ein Basismedium 11, ein Transferklebemittel 12, eine optionale Zwischenfarbschicht (nicht dargestellt) sowie Reflexionsfarbe 13, wobei diese Reflexionsfarbe 13 eine Vielzahl von Reflexionsteilchen 14 (z.B. mit einer maximalen Größe von 45 µm) enthält, und wobei die Reflexionsteilchen 14 über die Oberfläche der ausgehärteten Reflexionsfarbe 13 erhaben sind. Geeignete Verfahren zur Herstellung eines solchen Reflexionstransfers sind in EP 1 137 546 B1 beschrieben. Bei dem Basismedium 11 kann es sich um ein klebemittelabweisendes Schutzpapier, z.B. auf Silikonbasis, handeln, welches vor dem Platzieren des Reflexionstransfers auf dem Textilsubstrat abgezogen wird. Das innerhalb des Reflexionstransfers 10 verwendete Transferklebemittel 12 kann mittels eines beliebigen geeigneten Verfahrens, beispielsweise einem Extrusionsverfahren, einem Siebdruckverfahren (wie in der EP 1 137 546 B1 beschrieben), einem geeigneten Beschichtungsverfahren oder in anderer Weise auf das Basismedium 11 aufgebracht werden.

Als Transferklebemittel 12 geeignet ist z.B. eine thermoplastische Copolyester-Schmelzklebefolie. Die Folie bzw. das Transferklebemittel 12 sollte eine für den Aufnähvorgang hinreichende Festigkeit aufweisen und insbesondere einerseits nicht zu weich sein, um ein Festkleben an der während des Aufnähvorganges verwendeten Nadel, welche den Kleber bei der Auf- und Abbewegung erwärmt, zu verhindern. Gegebenenfalls kann das Transferklebemittel 12 hierzu mit stärkenden Partikeln versehen werden. Zum anderen sollte die Folie bzw. das Transferklebemittel 12 nicht zu hart sein, um noch ein problemloses Hindurchführen der Nadel sowie ein anschließendes Abreißen entlang der erzeugten Perforierungslinie zu ermöglichen.

Gemäß einer weiteren Ausführungsform kann in die für den erfindungsgemäßen Aufnähvorgang verwendete Vorrichtung auch zusätzlich eine Lasereinheit integriert sein, um während oder nach den vorstehend beschriebenen Schritten auf dem jeweils aufgenähten und eingespannten Gebilde eine passgenaue Laserbearbeitung durchzuführen. Wenngleich die Motivvorlage bzw. Folie durch die beschriebenen Verfahrensschritte bereits ausreichend perforiert wird, um ein Entfernen (z.B. Abreißen) nicht gewünschter Folienstücke zu ermöglichen, kann mittels der Lasereinheit zusätzlich über den Reflexionstransfer bzw. die Folie gefahren werden, um etwa dessen Oberfläche zu schraffieren, die Reflexion an der Oberfläche bereichsweise gezielt zu "zerstören" und attraktive Effekte ("Reflexion/Nicht-Reflexion") zu erzielen. Hierbei wird der Umstand ausgenutzt, dass bei dem vorstehend beschriebenen, im Rahmen der Erfindung eingesetzten Reflexionstransfer die Oberfläche mit den Reflexionsteilchen nach oben hin offen und nicht mit einem Übertragungstape abgedeckt ist. Des Weiteren können auf die reflektierenden Bereiche auch nichtreflektierende Elemente wie z.B. Flockstreifen, nicht-reflektierende Farben etc. aufgedruckt werden.

Wenn die Erfindung auch anhand spezieller Ausführungsformen beschrieben wurde, erschließen sich für den Fachmann zahlreiche Variationen und alternative Ausführungsformen, z.B. durch Kombination und/oder Austausch von Merkmalen einzelner Ausführungsformen. Dementsprechend versteht es sich für den Fachmann, dass derartige Variationen und alternative Ausführungsformen von der vorliegenden Erfindung mit umfasst sind, und die Reichweite der Erfindung nur im Sinne der beigefügten Patentansprüche und deren Äquivalente beschränkt ist.

## Patentansprüche

1. Verfahren zum Herstellen eines Textilprodukts, wobei das Verfahren folgende Schritte aufweist:
a) Platzieren einer flächigen Motivvorlage (10) auf einem Textilsubstrat (30);
b) Aufnähen der Motivvorlage (10) auf das Textilsubstrat (30);
c) Entfernen des außerhalb eines durch die Perforation begrenzten Motivs befindlichen Teils (10b) der Motivvorlage (10); und
d) dauerhaftes Fixieren des verbliebenen, das Motiv aufweisenden Teils (10a) der Motivvorlage (10) an dem Textilsubstrat (30);
**dadurch gekennzeichne**t, **dass**
beim Aufnähen der Motivvorlage (10) im Schritt b) eine das gewünschte Motiv in der Motivvorlage (10) begrenzende Perforation erzeugt wird, wobei die Motivvorlage (10) bereits ausreichend perforiert wird, dass ein manuelles Abreißen des nicht zu dem gewünschten Motiv gehörenden Teils der Motivvorlage (10) ermöglicht wird.

2. Verfahren nach Anspruch 1, **dadurch gekennzeichnet, dass** die Motivvorlage (10) auf der dem Textilsubstrat (30) zugewandten Seite eine Fixierungsschicht aufweist.

3. Verfahren nach Anspruch 1 oder 2, **dadurch gekennzeichnet, dass** der Schritt a) ein vorläufiges Fixieren der Motivvorlage (10) auf dem Textilsubstrat (30), vorzugsweise unter Verwendung eines Sprühklebers, umfasst.

4. Verfahren nach einem der vorhergehenden Ansprüche, **dadurch gekennzeichnet, dass** die Motivvorlage (10) eine aus einem thermoplastischen Kunststoff hergestellte Folie aufweist.

5. Verfahren nach einem der vorhergehenden Ansprüche, **dadurch gekennzeichnet, dass** eine Motivvorlage (10) mit einer Gesamtdicke im Bereich von 15 µm bis 100 µm, insbesondere im Bereich von 25 µm bis 85 µm, verwendet wird.

6. Verfahren nach einem der vorhergehenden Ansprüche, **dadurch gekennzeichnet, dass** die Motivvorlage (10) mit reflektierenden Eigenschaften versehen ist.

7. Verfahren nach Anspruch 6, **dadurch gekennzeichnet, dass** als Motivvorlage (10) ein Reflexionstransfer mit folgenden Schichtaufbau verwendet wird: Basismedium (11), Transferklebemittel (12), optionale Zwischenfarbschicht, Reflexionsfarbe (13), wobei die Reflexionsfarbe (13) eine Vielzahl von Reflexionsteilchen (14) enthält, und wobei die Reflexionsteilchen (14) über die Oberfläche der ausgehärteten Reflexionsfarbe (13) erhaben sind.

8. Verfahren nach Anspruch 7, **dadurch gekennzeichnet, dass** in dem Reflexionstransfer das gewünschte Motiv durch die Reflexionsfarbe in der Aufsicht seitenrichtig dargestellt ist.

## Claims

1. A method for producing of a textile product, wherein the method comprises the following steps:
a) placing a flat motif template (10) on a textile substrate (30);
b) sewing the motif template (10) onto the textile substrate (30);
c) removing the part (10b) of the motif template (10), that is outside the motif defined by the perforation; and
d) permanently fixing the remaining part (10a), having the motif, of the motif template (10) to the textile substrate (30);
**characterized in that**
when sewing the motif template (10) in step b) a perforation defining the desired motif in the motif template (10) is produced, wherein the motif template (10) is already sufficiently perforated to permit a manual tearing off of the part of the motif template (10) not belonging to the desired motif.

2. A method according to claim 1, **characterized in that** the motif template (10) has a fixing layer on the side towards the textile substrate (30).

3. A method according to claim 1 or 2, **characterized in that** step a) comprises a provisional fixing of the motif template (10) on the textile substrate (30), preferably using a spray adhesive.

4. A method according to one of the preceding claims, **characterized in that** the motif template (10) has a film made from a thermoplastic material.

5. A method according to one of the preceding claims, **characterized in that** a motif template (10) with a total thickness in the range from 15 µm to 100 µm, in particular in the range from 25 µm to 85 µm, is used.

6. A method according to one of the preceding claims, **characterized in that** the motif template (10) is provided with reflecting properties.

7. A method according to claim 6, **characterized in that** a reflection transfer with the following layer structure is used as the motif template (10): base medium (11), transfer adhesive (12), optional intermediate color layer, reflection color (13), wherein the reflection color (13) contains a multiplicity of reflection particles (14), and wherein the reflection particles (14) are raised above the surface of the hardened reflection color (13).

8. A method according to claim 7, **characterized in that** in the reflection transfer the desired motif is represented in correct-side relationship in plan view by the reflection color.

## Revendications

1. Procédé de fabrication d'un produit textile, ledit procédé incluant les étapes suivantes :
a) mise en place, sur un substrat textile (30), d'un modèle de conception (10) de configuration plane ;
b) couture rapportée dudit modèle de conception (10) sur ledit substrat textile (30) ;
c) enlèvement de la partie (10b) dudit modèle de conception (10) qui est située à l'extérieur d'un motif délimité par la perforation ; et
d) assujettissement durable, audit substrat textile (30), de la partie restante (10a) dudit modèle de conception (10) qui est munie dudit motif ;
**caractérisé par le fait**
**qu'**une perforation, délimitant le motif souhaité dans le modèle de conception (10), est engendrée au stade de la couture rapportée dudit modèle de conception (10), à l'étape b), ledit modèle de conception (10) étant déjà suffisamment perforé pour permettre un arrachage manuel de la partie dudit modèle de conception (10) qui ne relève pas du motif souhaité.

2. Procédé selon la revendication 1, **caractérisé par le fait que** le modèle de conception (10) est muni d'une couche d'assujettissement sur la face tournée vers le substrat textile (30).

3. Procédé selon la revendication 1 ou 2, **caractérisé par le fait que** l'étape a) inclut un assujettissement provisoire du modèle de conception (10) au substrat textile (30), de préférence avec utilisation d'un adhésif pulvérisé.

4. Procédé selon l'une des revendications précédentes, **caractérisé par le fait que** le modèle de conception (10) est pourvu d'un feuil fabriqué en une matière thermoplastique.

5. Procédé selon l'une des revendications précédentes, **caractérisé par** l'utilisation d'un modèle de conception (10) présentant une épaisseur totale située dans la plage de 15 µm à 100 µm, notamment dans la plage de 25 µm à 85 µm.

6. Procédé selon l'une des revendications précédentes, **caractérisé par le fait que** le modèle de conception (10) est doté de propriétés réfléchissantes.

7. Procédé selon la revendication 6, **caractérisé par** l'utilisation, en tant que modèle de conception (10), d'un élément de transfert réfléchissant présentant la structure stratifiée suivante : matériau de base (11), agent adhésif de transfert (12), couche de peinture intermédiaire facultative, peinture de réflexion (13), ladite peinture de réflexion (13) renfermant une multiplicité de particules réfléchissantes (14), et lesdites particules réfléchissantes (14) faisant saillie au-delà de la surface de ladite peinture de réflexion (13) durcie.

8. Procédé selon la revendication 7, **caractérisé par le fait que** le motif souhaité est représenté par la peinture de réflexion, dans l'élément de transfert réfléchissant, sur le côté pertinent observé en plan.
